# EUROPEAN PATENT APPLICATION

(11) **EP 4 836 118 A1**
(43) Date of publication of application: **04.11.2026**
(21) Application number: 24910488.6
(22) Date of filing: 27.11.2024
(51) Int. Cl.: H01M 50/204, H01M 50/24, H01M 10/613, H01M 10/6554

(54) **BATTERY TRAY AND BATTERY ASSEMBLY**

(30) Priority: 29.12.2023 CN 202311869949
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: ZHAO, Qun, Hangzhou, Zhejiang 310051 (CN); CHEN, Boyan, Hangzhou, Zhejiang 310051 (CN); ZHOU, Wei, Hangzhou, Zhejiang 310051 (CN); ZHANG, Dewang, Hangzhou, Zhejiang 310051 (CN); REN, Xiangfei, Hangzhou, Zhejiang 310051 (CN)
(74) Representative: Range, Christopher William
(86) International application number: PCT/CN2024/134862
(87) International publication number: WO 2025/139555

(57) **Abstract**

A battery tray (100) and a battery assembly. The battery tray (100) comprises: a frame (21), the frame (21) being arranged in a surrounding manner to define a battery accommodating cavity inside the frame (21); a heat exchange plate (1), the heat exchange plate (1) being arranged at the bottom of the frame (21) and closing the battery accommodating cavity; and an extension plate (11), the extension plate (11) being connected to the heat exchange plate (1) and protruding beyond the outer periphery of the frame (21), wherein a cooling flow channel adapted to exchange heat from the battery accommodating cavity is formed inside the heat exchange plate (1), and a water inlet (10) and a water outlet (20) being in communication with the cooling flow channel are formed on the extension plate (11).

## Description

### CROSS-REFERENCE TO RELATED APPLICATIONS

This application claims a priority to Chinese Patent Application No. 202311869949.0, filed on December 29, 2023, the entire content of which is incorporated herein by reference.

### FIELD

The present disclosure relates to, but is not limited to, the technical field of batteries, and in particular, to a battery tray and a battery assembly.

### BACKGROUND

In the related art, for a battery assembly of a vehicle, a heat exchange plate plays a crucial role in cooling the battery assembly. In a conventional battery assembly, a water inlet and a water outlet of the heat exchange plate are generally formed inside a frame of the battery assembly. When leakage occurs at the water inlet and water outlet of the heat exchange plate, a short circuit inside the battery assembly and a sharp rise in a temperature of a battery pack may be caused, which seriously affects safety and reliability of the battery assembly during operation, while shortening performance and a service life of a battery.

In addition, since the water inlet and water outlet of the heat exchange plate are formed inside the battery assembly, maintenance of the heat exchange plate is made relatively difficult.

### SUMMARY

The following description is a summary of the subject matter described in detail herein. This summary is not intended to limit the scope of the claims.

An objective of the present disclosure is to propose a battery tray, which can effectively prevent the occurrence of a short circuit inside a battery assembly, ensure safety and reliability of the battery assembly during operation, and also reduce maintenance difficulty of a water inlet and a water outlet of a heat exchange plate.

Another objective of the present disclosure is to propose a battery assembly.

The battery tray according to the present disclosure includes: a frame arranged in a surrounding manner to define a battery receiving cavity in the frame; a heat exchange plate disposed on a bottom of the frame and closing the battery receiving cavity; and an extension plate connected to the heat exchange plate and protruding from an outer periphery of the frame. A cooling flow channel adapted to exchange heat from the battery receiving cavity is formed in the heat exchange plate, and a water inlet and a water outlet that are in communication with the cooling flow channel that are formed on the extension plate.

With the battery tray according to the present disclosure, the battery receiving cavity is formed in the frame. The heat exchange plate is disposed on the bottom of the frame. The extension plate is disposed at an outer peripheral edge of the frame, is connected to the heat exchange plate, protrudes from the outer periphery of the frame and extends in a direction away from the battery receiving cavity. The water inlet and the water outlet that are in communication with the cooling flow channel are formed on the extension plate. In this way, the water inlet and the water outlet of the heat exchange plate are formed outside the frame, which prevents a cooling liquid from flowing into an interior of the battery assembly when leakage occurs at the water inlet or the water outlet of the heat exchange plate, thus effectively preventing the occurrence of the short circuit inside the battery assembly, and ensuring the safety and reliability of the battery assembly during operation. Meanwhile, since in the present disclosure, the water inlet and the water outlet of the heat exchange plate are formed outside the frame, maintenance and repair of the water inlet and the water outlet of the heat exchange plate can be performed without disassembling the battery assembly, making the maintenance and repair of the water inlet and the water outlet of the heat exchange plate more convenient and efficient.

The battery assembly according to the present disclosure includes: a plurality of battery packs arranged sequentially in a first direction, wherein each of the plurality of battery packs is provided with a plurality of battery cells arranged sequentially in a second direction; and the battery tray as described above. The plurality of battery packs are received in the battery receiving cavity.

With the battery assembly according to the present disclosure, the battery tray as described above is provided. The battery assembly is internally further provided with the plurality of battery packs arranged sequentially in the first direction. Moreover, each of the plurality of battery packs is provided with the plurality of battery cells arranged sequentially in the second direction. The plurality of battery packs are received in the battery receiving cavity. Therefore, with the battery assembly according to the present disclosure, by forming the water inlet and the water outlet of the heat exchange plate outside the frame, the battery assembly can be directly assembled with a vehicle in a Y-direction without an additional water circuit conversion assembly, achieving higher efficiency of assembly and disassembly between the battery assembly and an electrical device. In addition, since the water inlet and the water outlet of the heat exchange plate are formed outside the battery assembly, maintenance of the battery assembly is more convenient. Meanwhile, the occurrence of leakage at the water inlet and the water outlet does not affect the interior of the battery assembly, which improves the safety and reliability of the battery assembly during operation.

Additional aspects and advantages of the present disclosure will be in part set forth below, become apparent in part from the following description, or can be learned by practice of the present disclosure.

Other aspects may be apparent upon reading and understanding the drawings and detailed descriptions.

### BRIEF DESCRIPTION OF THE DRAWINGS

FIG. 1 is a front view of a battery tray according to an embodiment of the present disclosure;
FIG. 2 is a cross-sectional view of a battery tray according to an embodiment of the present disclosure;
FIG. 3 is a front view of a connection plate according to an embodiment of the present disclosure;
FIG. 4 is a schematic view of a water outlet flow path, a water inlet flow path, a branch flow path, and a battery assembly according to an embodiment of the present disclosure;
FIG. 5 is a front view of a heat exchange plate according to an embodiment of the present disclosure;
FIG. 6 is a schematic view of a first heat exchange region according to an embodiment of the present disclosure;
FIG. 7 is a schematic view of a second heat exchange region according to an embodiment of the present disclosure;
FIG. 8 is a schematic view of a third heat exchange region according to an embodiment of the present disclosure;
FIG. 9 is a schematic view of a fourth heat exchange region according to an embodiment of the present disclosure;
FIG. 10 is a schematic view of a battery pack and a heat exchange plate according to an embodiment of the present disclosure; and
FIG. 11 is a bottom view of a battery tray according to an embodiment of the present disclosure.

### DETAILED DESCRIPTION

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

In the related art, for a battery assembly of a vehicle, a heat exchange plate plays a crucial role in cooling the battery assembly. In a conventional battery assembly, a water inlet and a water outlet of the heat exchange plate are generally formed inside a frame of the battery assembly. When leakage occurs at the water inlet and the water outlet of the heat exchange plate, a short circuit inside the battery assembly and a sharp rise in a temperature of a battery pack may be caused, which seriously affects safety and reliability of the battery assembly during operation, while shortening performance and a service life of a battery.

In addition, since the water inlet and water outlet of the heat exchange plate are formed inside the battery assembly, maintenance of the heat exchange plate is made relatively difficult.

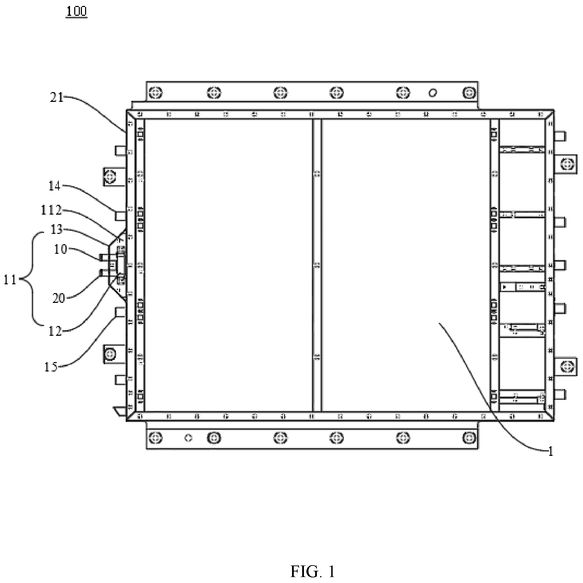

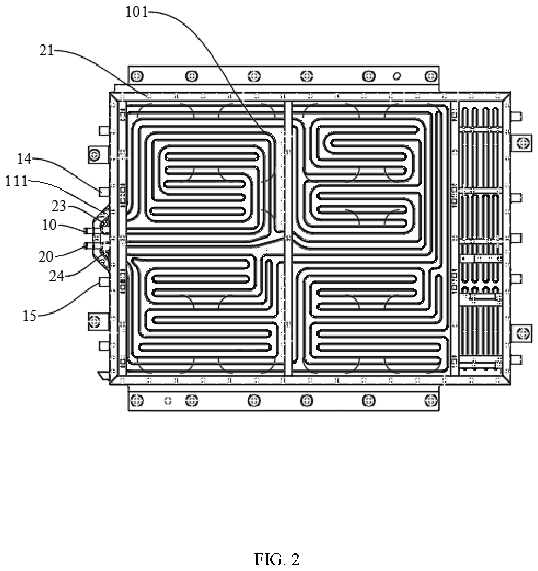

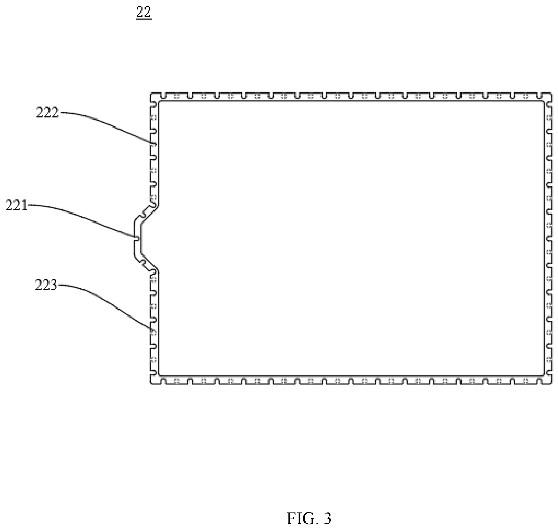

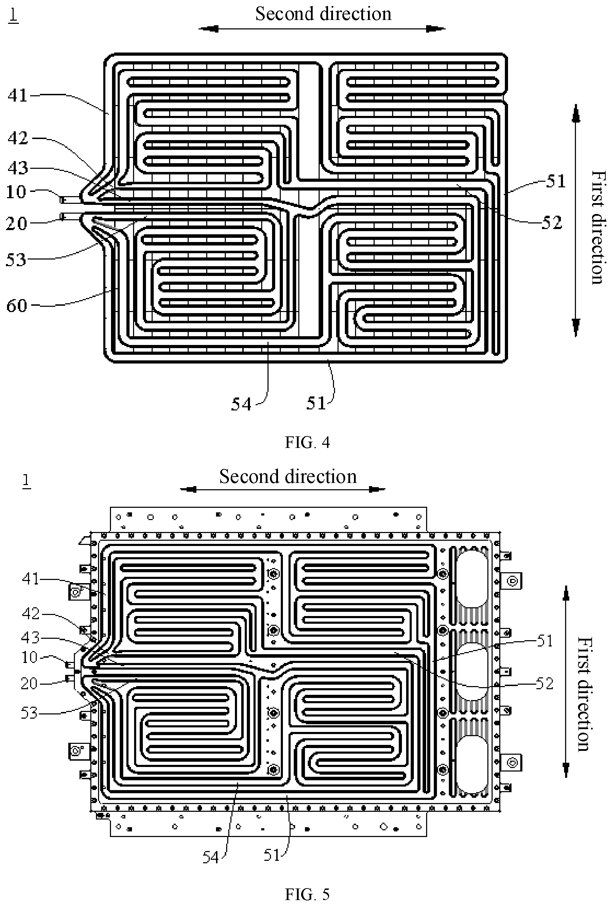

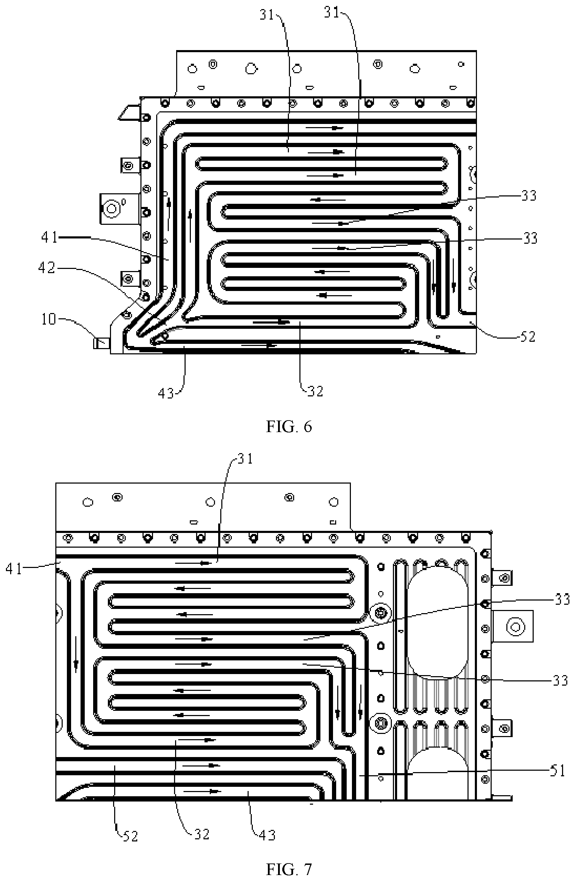

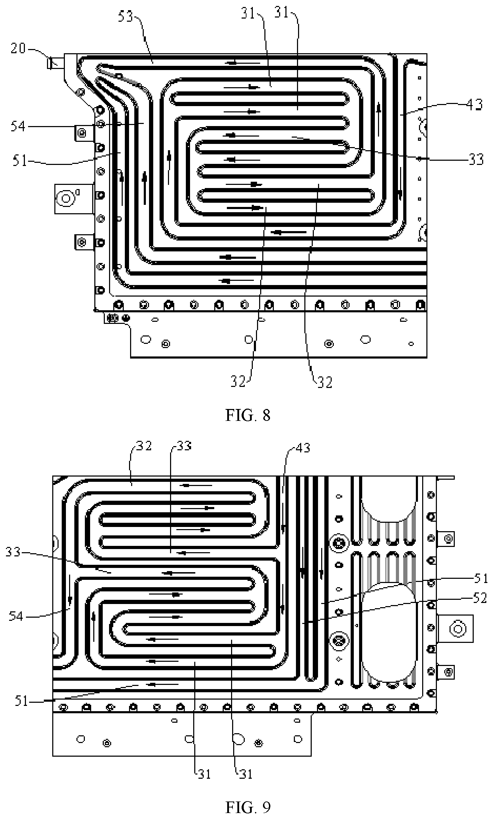

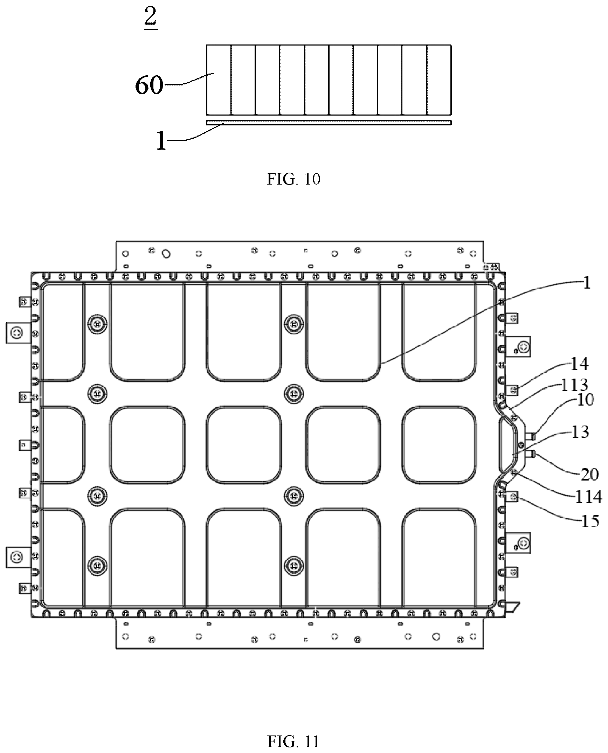

A battery tray according to the embodiments of the present disclosure is described below with reference to FIG. 1 to FIG. 11.

The battery tray 100 according to the present disclosure includes: a frame 21, a heat exchange plate 1, and an extension plate 11. The frame 21 is arranged in a surrounding manner to define a battery receiving cavity in the frame 21. The heat exchange plate 1 is disposed on a bottom of the frame 21 and closes the battery receiving cavity. The extension plate 11 is connected to the heat exchange plate 1 and protrudes from an outer periphery of the frame 21. A cooling flow channel adapted to exchange heat from the battery receiving cavity is formed in the heat exchange plate. A water inlet 10 and a water outlet 20 that are in communication with the cooling flow channel are formed on the extension plate 11.

In some specific embodiments, the battery tray 100 is composed of the frame 21, the heat exchange plate 1, and the extension plate 11. The battery receiving cavity is formed in the frame 21. The battery is disposed in the battery receiving cavity. The frame 21 is capable of providing protection for the battery to prevent the battery from being damaged by external impacts, and also capable of positioning the battery to ensure correct mounting of the battery. The heat exchange plate 1 is disposed on the bottom of the frame 21. The heat exchange plate 1 can close a bottom of the battery receiving cavity. A plurality of cooling flow channels that are distributed at various positions of the battery receiving cavity are formed in the heat exchange plate 1. A cooling liquid flows in the cooling flow channels, and may absorb heat in the battery receiving cavity to reduce a temperature inside the battery receiving cavity, and thus lower a temperature of the battery, preventing performance degradation or damage of the battery caused by overheating of the battery. The extension plate 11 is disposed at an outer peripheral edge of the frame 21, is connected to the heat exchange plate 1, protrudes from the outer periphery of the frame 21 and extends in a direction away from the battery receiving cavity. The water inlet 10 and the water outlet 20 that are in communication with the cooling flow channels are formed on the extension plate 11. In the present disclosure, the water inlet 10 and the water outlet 20 of the heat exchange plate 1 are formed outside the frame 21, which prevents the cooling liquid from flowing into an interior of the battery assembly when the leakage occurs at the water inlet 10 or the water outlet 20 of the heat exchange plate 1, thus effectively preventing the occurrence of the short circuit inside the battery assembly, and ensuring the safety and reliability of the battery assembly during operation. Meanwhile, compared with a conventional battery pack 2 where the water inlet 10 and the water outlet 20 of the heat exchange plate 1 are disposed inside the battery, since in the present disclosure, the water inlet 10 and the water outlet 20 of the heat exchange plate 1 are formed outside the frame 21, maintenance and repair of the water inlet 10 and the water outlet 20 of the heat exchange plate 1 can be performed without disassembling the battery assembly, making the maintenance and repair of the water inlet 10 and the water outlet 20 of the heat exchange plate 1 more convenient and efficient.

With the battery tray 100 according to the present disclosure, the battery receiving cavity is formed in the frame 21. The heat exchange plate 1 is disposed on the bottom of the frame 21. The extension plate 11 is disposed at the outer peripheral edge of the frame 21. The extension plate 11 is connected to the heat exchange plate 1, protrudes from the outer periphery of the frame 21, and extends in the direction away from the battery receiving cavity. The water inlet 10 and the water outlet 20 that are respectively in communication with the cooling flow channel are formed on the extension plate 11. In this way, the water inlet 10 and the water outlet 20 of the heat exchange plate 1 are formed outside the frame 21, which prevents the cooling liquid from flowing into the interior of the battery assembly when the leakage occurs at the water inlet 10 or the water outlet 20 of the heat exchange plate 1, thus effectively preventing the occurrence of the short circuit inside the battery assembly, and ensuring the safety and reliability of the battery assembly during operation. Meanwhile, since in the present disclosure, the water inlet 10 and the water outlet 20 of the heat exchange plate 1 are formed outside the frame 21, the maintenance and repair of the water inlet 10 and the water outlet 20 of the heat exchange plate 1 can be performed without disassembling the battery assembly, making the maintenance and repair of the water inlet 10 and the water outlet 20 of the heat exchange plate 1 more convenient and efficient.

According to some embodiments of the present disclosure, opening directions of the water inlet 10 and the water outlet 20 are the same as an extending direction of the heat exchange plate 1.

In some specific embodiments, the heat exchange plate 1 extends horizontally in a length direction of the frame 21, and the water inlet 10 and the water outlet 20 are open facing the length direction of the frame 21 of the battery, such that a water inlet direction and a water outlet direction of the cooling flow channel are the same as the extending direction of the heat exchange plate 1, both facing the length direction of the frame 21. The battery tray 100 may be directly assembled with the vehicle in the length direction of the frame 21, without an additional water circuit conversion assembly for converting a water inlet direction and a water outlet direction of the heat exchange plate 1 from a thickness direction of the frame 21 to the length direction of the frame 21, thus improving assembly and disassembly efficiency of the battery tray 100 and the vehicle, and reducing a manufacturing cost of the vehicle.

According to some embodiments of the present disclosure, the extension plate 11 includes: a body portion 13 and an adapter box 12. The body portion 13 is connected to the heat exchange plate 1 and has the same extending direction as the heat exchange plate 1. The body portion 13 protrudes from the outer periphery of the frame 21. The adapter box 12 is disposed on a side of the body portion 13 in a thickness direction of the body portion. The water inlet 10 and the water outlet 20 are formed on the adapter box 12. The adapter box 12 has a first chamber and a second chamber that are formed in the adapter box 12. The cooling flow channel is in communication with the water inlet 10 and the water outlet 20 respectively via the first chamber and the second chamber.

In some specific embodiments, the extension plate 11 is composed of the body portion 13 and the adapter box 12. The body portion 13 is disposed at an edge of the outer periphery of the frame 21. An end of the body portion 13 is connected to the heat exchange plate 1, and the other end of the body portion 13 protrudes from the outer periphery of the frame 21 and extends in a direction away from the heat exchange plate 1. The adapter box 12 is disposed on the side of the body portion 13 in the thickness direction of the body portion. The body portion 13 may be used to support and fix the adapter box 12, improving stability and reliability of the adapter box 12 during operation. The water inlet 10 and the water outlet 20 are formed on a side of the adapter box 12 facing away from the frame 21 in a length direction of the frame. The adapter box 12 further has the first chamber and the second chamber that are formed in the adapter box 12 and extend in a thickness direction of the adapter box 12. The water inlet 10 is in communication with the cooling flow channel via the first chamber. A cooling liquid flowing in the water inlet 10 along the length direction of the frame 21 may be switched to flow in the thickness direction of the frame 21 and then flow into the cooling flow channel when passing through the first chamber. The water outlet 20 is in communication with the cooling flow channel via the second chamber. A cooling liquid flowing in the cooling flow channel along the length direction of the frame 21 may be switched to flow in the thickness direction of the frame 21 and then flow into the water outlet 20 when passing through the second chamber. A flow direction of the cooling liquid is re-switched to flow in the length direction of the frame 21 when entering the water outlet 20. With the battery tray 100 of the present disclosure, through the switching of the first chamber and the second chamber, a flow direction of the cooling liquid in the cooling flow channel is the same as flow directions of the cooling liquid at the water inlet 10 and the water outlet 20. In this way, the battery tray 100 can be directly assembled with the vehicle in the length direction of the frame 21, without the additional water circuit conversion assembly for converting the water inlet direction and the water outlet direction of the heat exchange plate 1 from the thickness direction of the frame 21 to the length direction of the frame 21, thus improving the assembly and disassembly efficiency of the battery tray 100 and the vehicle, and reducing the manufacturing cost of the vehicle.

According to some embodiments of the present disclosure, the adapter box 12 includes: a housing and a stop plate. The water inlet 10 and the water outlet 20 are formed on a side of the housing facing away from the frame 21. The stop plate is disposed in the housing and divides an interior of the housing into the first chamber and the second chamber. The first chamber is in communication with both the water inlet 10 and the cooling flow channel. The second chamber is in communication with both the water outlet 20 and the cooling flow channel.

In some specific embodiments, the adapter box 12 is composed of a housing and a stop plate. The housing is disposed on the side of the body portion 13 in the thickness direction of the body portion. A side wall of the housing in a height direction is attached to the outer periphery of the frame 21. The housing extends in a thickness direction of the body portion 13. A water conversion chamber is formed in the housing. The water inlet 10 and the water outlet 20 are formed on a wall surface of the side of the housing facing away from the frame 21. A water inlet nozzle is further provided at the water inlet 10, and a water outlet nozzle is further provided at the water outlet 20. Extending directions of the water inlet nozzle and the water outlet nozzle are the same as the extending direction of the heat exchange plate 1. The water inlet 10 and the water outlet 20 are both in communication with the water conversion chamber. The stop plate is disposed in the water conversion chamber and divides the water conversion chamber into a first chamber and a second chamber that is relatively independent of first chamber, which can effectively prevent mixing of cooling liquids at different temperatures in the first chamber and the second chamber, ensuring a heat exchange effect of the heat exchange plate 1. The first chamber and the second chamber extend in the thickness direction of the adapter box 12. The water inlet nozzle is in communication with the cooling flow channel via the first chamber. A cooling liquid flowing in the water inlet nozzle along the extending direction of the heat exchange plate 1 may be switched to flow in the thickness direction of the adapter box 12 and then flow into the cooling flow channel when passing through the first chamber. The water outlet nozzle is in communication with the cooling flow channel via the second chamber. A cooling liquid flowing in the cooling flow channel along the extending direction of the heat exchange plate 1 may be switched to flow in the thickness direction of the adapter box 12 and then flow into the water outlet nozzle when passing through the second chamber. The flow direction of the cooling liquid is re-switched when the cooling liquid enters the water outlet nozzle, and the cooling liquid flows in the extending direction of the heat exchange plate 1. With the battery tray 100 of the present disclosure, through the switching of the first chamber and the second chamber, the flow direction of the cooling liquid in the cooling flow channel is the same as opening directions of the water inlet nozzle and the water outlet nozzle. In this way, the battery tray 100 can be directly assembled with the vehicle in the length direction of the frame 21, without the additional water circuit conversion assembly for converting the water inlet direction and the water outlet direction of the heat exchange plate 1 from the thickness direction of the frame 21 to the length direction of the frame 21, thus improving the assembly and disassembly efficiency of the battery tray 100 and the vehicle, and reducing the manufacturing cost of the vehicle.

According to some embodiments of the present disclosure, a first flow path and a second flow path that extend in a horizontal direction are formed in the body portion 13. The first chamber is in communication with the cooling flow channel via the first flow path, and the second chamber is in communication with the cooling flow channel via the second flow path. The first chamber has a first flow guide wall. The first flow guide wall has a first wall directly facing the first flow path and a second wall directly facing the water inlet 10. An arc transition is formed between the first wall and the second wall. The second chamber has a second flow guide wall. The second flow guide wall has a third wall directly facing the second flow path and a fourth wall directly facing the water outlet 20. An arc transition is formed between the third wall and the fourth wall.

In some specific embodiments, the first flow path and the second flow path that extend in the horizontal direction are formed in the body portion 13. An end of the first flow path is in communication with the first chamber, and the other end of the first flow path is in communication with the cooling flow channel. An end of the second flow path is in communication with the second chamber, and the other end of the second flow path is in communication with the cooling flow channel. Flow of the cooling liquid between the first chamber and a heat exchange flow channel, and between the second chamber and the heat exchange flow channel is realized via the first flow path and the second flow path, respectively. At least a part of an inner wall of the first chamber has the first flow guide wall. The first flow guide wall has the first wall directly facing the first flow path and the second wall directly facing the water inlet 10. An arc transition is formed between the first wall and the second wall. The second chamber has the second flow guide wall formed in the second chamber. The second flow guide wall has the third wall directly facing the second flow path and the fourth wall directly facing the water outlet 20. An arc transition is formed between the third wall and the fourth wall. Friction between the cooling liquid and both the first wall and the second wall can be reduced through the arc transition, thereby reducing flow resistance of the cooling liquid and improving flow smoothness of the cooling liquid. A pressure loss caused by a right-angle transition or a sharp transition can also be avoided through the arc transition, ensuring stability and a flow speed of the cooling liquid during flow.

According to some embodiments of the present disclosure, the heat exchange plate 1 includes a first heat exchange plate 1 and a second heat exchange plate 1. The first heat exchange plate 1 has a flow channel groove 101, and the second heat exchange plate 1 covers the first heat exchange plate 1 and closes the flow channel groove 101 to define the cooling flow channel. The body portion 13 includes: a first adapter plate 111 and a second adapter plate 112. The first adapter plate 111 and the first heat exchange plate 1 are constructed as one piece, and the first adapter plate 111 has an adapter groove in communication with the flow channel groove 101. The second adapter plate 112 and the second heat exchange plate 1 are constructed as one piece, and the second adapter plate 112 covers the first adapter plate 111 and closes the adapter groove to define an adapter flow channel in communication with the cooling flow channel. The adapter box 12 is disposed on a side of the second adapter plate 112 in the thickness direction of the second adapter plate. The second adapter plate 112 has adapter holes. The adapter flow channel is in communication with the first chamber and the second chamber respectively through the adapter holes.

In some specific embodiments, two heat exchange plates 1 are provided, and are the first heat exchange plate 1 and the second heat exchange plate 1, respectively. The first heat exchange plate 1 has a plurality of flow channel grooves 101 recessed in a direction away from the second heat exchange plate 1. The cooling liquid flows in the flow channel grooves 101 to realize cooling of the battery receiving cavity. The second heat exchange plate 1 covers the first heat exchange plate 1. The second heat exchange plate 1 may close the flow channel grooves 101 to form the heat exchange flow channel, effectively prevent the occurrence of leakage of the cooling liquid during flow in the heat exchange flow channel, and ensure stability and reliability of the battery assembly during operation. The body portion 13 is composed of the first adapter plate 111 and the second adapter plate 112. The first adapter plate 111 and the first heat exchange plate 1 are constructed as one piece. The second adapter plate 112 and the second heat exchange plate 1 are construted as one piece. On the one hand, the first adapter plate 111 and the first heat exchange plate can be manufactured by the same mold, and the second adapter plate 112 and the second heat exchange plate can be manufactured by the same mold, which reduces the number of manufactured parts and lowering the manufacturing cost. On the other hand, assembly and disassembly between the first adapter plate 111 and the first heat exchange plate, and between the second adapter plate 112 and the second heat exchange plate are more convenient, which reduces difficulty of cleaning and maintaining the first heat exchange plate 1 and the second heat exchange plate 1. The first adapter plate 111 has a first adapter groove and a second adapter groove that are in communication with the flow channel grooves 101. Structures of the first adapter groove and the second adapter groove are different. The first adapter groove is in communication with four flow channel grooves 101. The second adapter groove is in communication with three flow channel grooves 101. Moreover, the first adapter groove is in communication with the water inlet 10, and the second adapter groove is in communication with the water outlet 20. This design has a predetermined fool-proof function, effectively preventing the water inlet nozzle and the water outlet nozzle from being reversely assembled. The second heat exchange plate 1 covers the first adapter plate 111. The second heat exchange plate 1 may close the adapter grooves to define the adapter flow channel that is in communication with the heat exchange flow channels, and may effectively prevent the leakage of the cooling liquid when flowing from the heat exchange flow channels into the adapter flow channel or from the adapter flow channel into the heat exchange flow channels, ensuring the stability and reliability of the battery assembly during operation. The adapter box 12 is disposed on the side of the second adapter plate 112 in the thickness direction of the second adapter plate. The second adapter plate 112 has the adapter holes. The adapter flow channel is in communication with the first chamber and the second chamber respectively through the adapter holes. In this way, a change in the flow directions of the cooling liquid at the water inlet 10 and the water outlet 20 is realized.

According to some embodiments of the present disclosure, the frame 21 is provided with a first connection member 14 and a second connection member 15 on a side wall of the frame. The body portion 13 is located between the first connection member 14 and the second connection member 15. The body portion has a first side edge 113 on a side of the body portion close to the first connection member 14 and a second side edge 114 on a side of the body portion close to the second connection member 15. The first side edge 113 and the second side edge 114 extend obliquely towards each other in a direction away from the frame 21.

In some specific embodiments, the frame 21 is provided with the first connection member 14 and the second connection member 15 on a side wall of the frame in the length direction of the frame, and the first connection member and the second connection member protrude from the outer periphery of the frame 21. The body portion 13 is disposed between the first connection member 14 and the second connection member 15. The body portion 13 has a first side close to the first connection member 14, a second side close to the second connection member 15, a third side, the first side edge 113, and the second side edge 114. The first side and the second side are arranged in parallel, and are both perpendicular to the side wall of the frame 21. The first side edge 113 is connected to the first side. The second side edge 114 is connected to the second side. An end of the first side edge 113 away from the first side and an end of the second side edge 114 away from the second side are arranged obliquely towards each other. A predetermined distance exists between the first side edge 113 and the first connection member 14, and a predetermined distance exists between the second side edge 114 and the first connection member 14, such that the extension plate 11 does not interfere with the first connection member 14 and the second connection member 15, ensuring the stability and reliability of the battery assembly during operation. In addition, some other components are further provided on the body portion 13. Predetermined gaps also occur among the other components disposed on the body portion 13 and the first connection member 14 and the second connection member 15, such that the other components disposed on the body portion 13 do not interfere with the first connection member 14 and the second connection member 15, further improving the stability and reliability of the battery assembly during operation. The end of the first side edge 113 away from the first side and the end of the second side edge 114 away from the second side are connected by the third side. The third side is parallel to the side wall of the frame 21 in the length direction of the frame.

According to some embodiments of the present disclosure, the housing is provided with a first lug 23 and a second lug 24 at two sides of the housing in a width direction of the housing, respectively. The first lug 23 and the second lug 24 are both fixedly connected to the body portion 13. On the one hand, the first lug 23 and the second lug 24 both fix and support the adapter box 12, which improves a strength of a connection structure between the body portion 13 and the housing, improves stability and reliability of a connection between the housing and the body portion 13, avoids loosening or falling off of the adapter box 12 during use of the battery tray 100, and improves stability and reliability of the battery tray 100 in use. On the other hand, the first lug 23 and the second lug 24 can also protect an internal structure of the adapter box 12, preventing internal damage to the adapter box 12 when subjected to the external impacts.

According to some embodiments of the present disclosure, the battery tray 100 further includes: a connection plate 22 disposed on a side of the extension plate 11 in a thickness direction of the extension plate. The extension plate 11 is connected to the frame 21 by the connection plate 22.

In some specific embodiments, the connection plate 22 is further provided on the battery tray 100. An end of the connection plate 22 is connected to the frame 21. The other end of the connection plate 22 protrudes from the outer periphery of the frame 21, and is attached to the side of the extension plate 11 in the thickness direction of the extension plate. The extension plate 11 is connected to the frame 21 by the connection plate 22, which increases a contact area between the frame 21 and the extension plate 11, and improves stability and reliability of a connection between the frame 21 and the extension plate 11. Meanwhile, the connection plate 22 can also improve a structural strength of the extension plate 11 to some extent, enhancing stability and reliability when the battery assembly is docked with the vehicle.

According to some embodiments of the present disclosure, the connection plate 22 includes: a main portion 221 disposed on a side of the extension plate 11 in the thickness direction of the extension plate and fixed to the extension plate 11; and a first side plate 222 and a second side plate 223 that are disposed on two sides of the main portion 221 in a width direction of the main portion and extend to the frame 21. The first side plate 222 and the second side plate 223 directly face end surfaces of the frame 21 in the thickness direction of the frame and are connected to the end surfaces.

In some specific embodiments, the connection plate 22 is mainly composed of the main portion 221, the first side plate 222, and the second side plate 223. The main portion 221 has a shape the same as that of the body portion 13 of the extension plate 11. The main portion 221 is attached to the side of the body portion 13 in the thickness direction of the body portion and connected to the body portion 13 by a fastener. In this way, a structural strength and rigidity of the body portion 13 of the extension plate 11 are enhanced, and stability and reliability when the extension plate 11 is docked with the vehicle are improved. The first side plate 222 is provided at an end of the main portion 221 in the width direction of the main portion, and the second side plate 223 is provided at the other end of the main portion 221 in the width direction of the main portion. The first side plate 222 and the second side plate 223 extend towards a direction away from each other and in the width direction of the frame 21. The first side plate 222 and the second side plate 223 directly face end surfaces of the frame 21 in the thickness direction of the frame and are connected to the end surfaces, realizing a connection between the connection plate 22 and the frame 21. The extension plate 11 is connected to the frame 21 by the connection plate 22 through the main portion 221, the first side plate 222, and the second side plate 223, which further increases the contact area between the frame 21 and the extension plate 11, and improves the stability and reliability of the connection between the frame 21 and the extension plate 11.

The battery assembly according to the present disclosure is briefly described below.

The battery assembly according to the present disclosure is provided with the battery tray 100 according to any one of the above embodiments. Since the battery assembly according to the present disclosure is provided with the battery tray 100 according to any one of the above embodiments, the battery assembly is internally further provided with a plurality of battery packs 2 arranged sequentially in a first direction. Each of the plurality of battery packs 2 is provided with a plurality of battery cells 60 arranged sequentially in a second direction. The plurality of battery packs 2 are received in the battery receiving cavity. Therefore, with the battery assembly according to the present disclosure, by forming the water inlet 10 and the water outlet 20 of the heat exchange plate 1 outside the frame 21, and making the opening directions of the water inlet 10 and the water outlet 20 the same as the extending direction of the heat exchange plate 1, the battery assembly can be directly assembled with the vehicle in a Y-direction without the additional water circuit conversion assembly, achieving higher efficiency of assembly and disassembly between the battery assembly and an electrical device. In addition, since the water inlet 10 and the water outlet 20 of the heat exchange plate 1 are formed outside the battery assembly, maintenance of the battery assembly is more convenient. Meanwhile, the occurrence of leakage at the water inlet and the water outlet does not affect the interior of the battery assembly, which improves the safety and reliability of the battery assembly during operation.

In some specific embodiments, the first direction may be configured as a length direction of the battery assembly, the second direction may be configured as a width direction of the battery assembly, and the third direction may be configured as a height direction of the battery assembly. The plurality of battery cells 60 are arranged sequentially in the second direction to form the battery pack 2. The battery assembly includes a plurality of battery packs 2 arranged sequentially in the second direction. The battery assembly further includes the heat exchange plate 1 disposed on a side of each of the plurality of battery packs 2 in the third direction. The plurality of battery cells 60 abut against the heat exchange plate 1, which enables the heat exchange plate 1 to heat or cool the plurality of battery cells 60. The heat exchange plate 1 has a plurality of heat exchange regions. One heat exchange region is provided corresponding to the plurality of battery packs 2. A plurality of branch flow paths are formed in each of the plurality of heat exchange regions . One battery pack 2 is provided corresponding to the plurality of branch flow paths. A water inlet flow path and a water outlet flow path are formed in the heat exchange plate 1. The heat exchange plate 1 further has the water inlet 10 and the water outlet 20. The water inlet flow path has an end in communication with the water inlet 10 and the other end in communication with upstream ends of the branch flow paths. The water outlet flow path has an end in communication with the water outlet 20 and the other end in communication with downstream ends of the branch flow paths.

It can be understood that the cooling liquid flows out from the water outlet 20 after sequentially passing through the water inlet 10, the water inlet flow path, the branch flow paths, and the water outlet flow path, and exchanges heat with the plurality of battery cells 60 during flow. One heat exchange region corresponds to the plurality of battery packs 2, and one battery pack 2 corresponds to the plurality of branch flow paths. A cooling liquid flowing in the plurality of branch flow paths may exchange heat with the battery pack 2, improving a heat exchange effect of the battery pack 2. It is worth mentioning that an operation temperature of the battery pack 2 affects operation efficiency of the battery pack 2 when the battery pack 2 is in operation. Therefore, through the above arrangement, the temperature of the battery pack 2 can be made more stable during operation, resulting in more stable operation efficiency of the battery pack 2, thus improving operation stability of the battery assembly.

According to some embodiments of the present disclosure, the heat exchange plate 1 has a water inlet 10, a water outlet 20, a water inlet flow path in communication with the water inlet 10, and a water outlet flow path in communication with the water outlet 20. The heat exchange plate 1 has a plurality of heat exchange regions corresponding to the plurality of battery packs 2. A plurality of branch flow paths are formed in each of the plurality of heat exchange regions, and the plurality of branch flow paths correspond to each of the plurality of battery packs 2. An upstream end of each of the plurality of branch flow paths is in communication with the water inlet flow path and a downstream end of each of the plurality of branch flow paths is in communication with the water outlet flow path.

According to some embodiments of the present disclosure, in one of the plurality of heat exchange regions, the plurality of branch flow paths extend in the second direction and are arranged at intervals in the first direction. A cooling liquid in at least one of the plurality of branch flow paths flows in a first flow direction, and a cooling liquid in at least one other of the plurality of branch flow paths flows in a second flow direction opposite to the first flow direction.

In some specific embodiments, the plurality of branch flow paths extend in the second direction, and are arranged at intervals in the first direction. It can be understood that the cooling liquid enters from the water inlet 10, flows sequentially through the water inlet flow path, the branch flow paths, and the water outlet flow path, and is then discharged from the water outlet 20. The cooling liquid exchanges heat with the battery pack 2 during flow. Therefore, a heat loss of the cooling liquid gradually increases as the cooling liquid flows, resulting in a decrease in a heat exchange effect on the battery cells 60. By configuring the cooling liquid to flow along the first flow direction in some of the branch flow paths and along the second flow direction in other branch flow paths, with the first flow direction being opposite to the second flow direction, a phenomenon where some battery cells 60 in the heat exchange region exhibit a favorable heat exchange effect while others exhibit a poor heat exchange effect can be avoided, allowing the heat exchange plate 1 to achieve more uniform heat exchange for the plurality of battery cells 60 in the heat exchange regions.

In one heat exchange region, at least part of adjacent branch flow paths have opposite flow directions, and are in communication with each other. Therefore, with the above arrangement, the cooling liquid can be allowed to flow continuously in the heat exchange region, preventing the cooling liquid from directly entering the water outlet flow path after passing through a single branch flow path, prolonging a residence time of the cooling liquid in the heat exchange region, and improving a utilization rate of the cooling liquid.

According to some embodiments of the present disclosure, the number of branch flow paths in the first flow direction is i1, and the number of branch flow paths in the second flow direction is i2, where 0.3≤i1/i2≤1.

In some specific embodiments, adjacent branch flow paths include at least part with the same flow direction, and at least part with opposite flow directions. As an example, among four branch flow paths arranged sequentially in the first direction, branch flow paths located at two sides in the first direction are respectively configured as a first flow passage and a second flow passage. Two branch flow paths located between the first flow passage and the second flow passage are configured as third flow passages, respectively. A flow direction of the cooling liquid in the two third flow passages is a first flow direction. A flow direction of the cooling liquid in the first flow passage and the second flow passage is a second flow direction. One end on the same side of each of the two third flow passages is in communication with the first flow passage, and the other end on the same side of each of the two third flow passages is in communication with the second flow passage. The relationship of 0.3≤i1/i2≤1 shall be satisfied, which is not limited herein. Therefore, with the above arrangement, the plurality of branch flow paths can be made connected in series and/or in parallel with each other, which prolongs the residence time of the cooling liquid in the heat exchange region and improves a heat exchange effect of the cooling liquid on the battery pack 2. Meanwhile, it can be understood that when the cooling liquid flows entirely in the first flow direction or the second flow direction, the heat exchange effect of the cooling liquid gradually decreases in the flow direction of the cooling liquid, resulting in a phenomenon where some battery cells 60 in one battery pack 2 have a favorable heat exchange effect while other battery cells 60 in the one battery pack 2 have a poor heat exchange effect. Therefore, by configuring the cooling liquid to flow along the first flow direction and the second flow direction in the plurality of branch flow paths, more uniform heat exchange for the plurality of battery cells 60 of the battery pack 2 can be achieved, thus improving the heat exchange effect of the battery pack 2, stabilizing the operation temperature of the battery pack 2. Thus, the operation efficiency of the battery pack 2 is made more stable, and the operation stability of the battery assembly is further improved.

According to some embodiments of the present disclosure, the plurality of branch flow paths includes: a first branch flow path 31 and a second branch flow path 32 that are disposed at two sides of the heat exchange region in the first direction, respectively; and a plurality of third branch flow paths 33 that are in communication with each other. The plurality of third branch flow paths 33 are formed between the first branch flow path 31 and the second branch flow path 32. The first branch flow path 31 is in communication with the second branch flow path 32 via the plurality of third branch flow paths 33. In at least one of the plurality of heat exchange regions, the first branch flow path 31 is in communication with the water inlet flow path, and the second branch flow path 32 is in communication with the water outlet flow path; and/or in at least one of the plurality of heat exchange regions, each of the first branch flow path 31 and the second branch flow path 32 is in communication with the water inlet flow path, and at least one of the plurality of third branch flow paths 33 is in communication with the water outlet flow path.

In some specific embodiments, in at least one of the plurality of heat exchange regions, an end of the first branch flow path 31 and an end of the second branch flow path 32 are in communication with the water inlet flow path, and the other end of the first branch flow path 31 and the other end of the second branch flow path 32 are in communication with at least one third branch flow path 33. Among the plurality of third branch flow paths 33, a third branch flow path 33 in communication with the first branch flow path 31 and a third branch flow path 33 in communication with the second branch flow path 32 are in communication with the water outlet flow path. Alternatively, an end of one of the plurality of third branch flow paths 33 may be in communication with the first branch flow path 31 and the second branch flow path 32, and the other end of the one of the plurality of third branch flow paths 33 is in communication with the water outlet flow path, which is not limited herein.

In one heat exchange region, a part of the battery pack 2 close to an outer periphery of the heat exchange region is configured as an edge portion. Since the edge portion has a relatively large contact area with an external environment, when the heat exchange plate 1 heats the plurality of battery packs 2, a heat loss of the edge portion is relatively large, resulting in low heating efficiency of the heat exchange plate 1 for the battery pack 2. When the heat exchange plate 1 is adapted to heat the battery pack 2, the cooling liquid starts to heat the plurality of battery assemblies corresponding to the heat exchange regions from the first branch flow path 31 and the second branch flow path 32. The first branch flow path 31 and the second branch flow path 32 correspond to the edge portion. Moreover, since a heat loss of the cooling liquid flowing in the first branch flow path 31 and the second branch flow path 32 is relatively small, the first branch flow path 31 and the second branch flow path 32 have a favorable heating effect on the edge portion. Therefore, through the above arrangement, a heating effect on the edge portion can be improved to compensate for the heat loss of the edge portion, thus achieving more uniform heating of the battery pack 2 corresponding to the heat exchange region by the cooling liquid, improving a heating effect of the battery pack 2 corresponding to the heat exchange region, and improving a cold-start capability of the battery assembly.

In some other specific embodiments, in the at least one of the plurality of heat exchange regions, the first branch flow path 31 is in communication with the water inlet flow path, and the second branch flow path 32 is in communication with the water outlet flow path. Therefore, after entering the heat exchange region from the water inlet flow path, the cooling liquid passes through the first branch flow path 31, the third branch flow path 33, and the second branch flow path 32 sequentially and enters the water outlet flow path. A flow path of the cooling liquid is simple, which simplifies an arrangement manner of the first branch flow path 31, the second branch flow path 32, and the third branch flow path 33 in the heat exchange region, and improves production efficiency of the heat exchange plate 1. Meanwhile, the residence time of the cooling liquid in the heat exchange region is prolonged, and the utilization rate of the cooling liquid is improved.

It is worth mentioning that a plurality of first branch flow paths 31 may be provided and connected in parallel with each other. As an example, two first branch flow paths 31 are provided. An end on the same side of each of the two first branch flow paths 31 is in communication with an end of the third branch flow path 33, and the other end on the same side of each of the two first branch flow paths 31 is in communication with the water inlet flow path. Similarly, a plurality of second branch flow paths 32 may be provided and connected in parallel with each other. As an example, two second branch flow paths 32 are provided. An end on the same side of each of the two second branch flow paths 32 is in communication with an end of the third branch flow path 33, and the other end on the same side of each of the two second branch flow paths 32 is in communication with the water outlet flow path.

According to some embodiments of the present disclosure, the plurality of heat exchange regions includes: a first heat exchange region, a second heat exchange region, a third heat exchange region, and a fourth heat exchange region. The first heat exchange region and the second heat exchange region are spaced apart from each other in the second direction. The first heat exchange region and the third heat exchange region are spaced apart from each other in the first direction. The fourth heat exchange region and the third heat exchange region are spaced apart from each other in the second direction. The fourth heat exchange region and the second heat exchange region are spaced apart from each other in the first direction. The water inlet 10 is formed in the first heat exchange region, and the water outlet 20 is formed in the third heat exchange region.

It can be understood that the first heat exchange region, the second heat exchange region, the third heat exchange region, and the fourth heat exchange region are provided on the heat exchange plate 1 and distributed in a 2*2 grid. The layout of the plurality of heat exchange regions is compact and regular, which improves a utilization rate of the heat exchange plate 1, while simplifying a manufacturing process of the heat exchange plate 1, and improving the production efficiency of the heat exchange plate 1.

In some specific embodiments, the water inlet 10 is formed in the first heat exchange region, and the water outlet 20 is formed in the third heat exchange region. Therefore, the cooling liquid may enter the water inlet flow path from the water inlet 10, exchange heat with the first heat exchange region, then flow back to the third heat exchange region through the water outlet flow path, and finally be discharged from the water outlet 20. At this time, the cooling liquid may exchange heat with the first heat exchange region and the third heat exchange region. Alternatively, the cooling liquid may enter the second heat exchange region through the water inlet flow path, exchange heat with the second heat exchange region, then flow back to the third heat exchange region through the water outlet flow path, and finally be discharged from the water outlet 20. At this time, the cooling liquid may exchange heat with the first heat exchange region, the second heat exchange region, and the third heat exchange region. Alternatively, the cooling liquid may enter the third heat exchange region through the water inlet flow path, exchange heat with the third heat exchange region, and then be discharged through the water outlet flow path and the water outlet 20. At this time, the cooling liquid may exchange heat with the first heat exchange region and the third heat exchange region. Alternatively, the cooling liquid may enter the fourth heat exchange region through the water inlet flow path, exchange heat with the fourth heat exchange region, flow back to the third heat exchange region through the water outlet flow path, and finally be discharged from the water outlet 20. At this time, the cooling liquid may exchange heat with the first heat exchange region, the fourth heat exchange region, and the third heat exchange region. Therefore, with the above arrangement, the residence time of the cooling liquid in the heat exchange regions can be prolonged, improving the utilization rate of the cooling liquid.

The water inlet flow path includes: a first water inlet flow path 41, a second water inlet flow path 42, and a third water inlet flow path 43. The first water inlet flow path 41 has an end in communication with the water inlet 10 and the other end in communication with the first branch flow path 31 and the second branch flow path 32 of the second heat exchange region. The first water inlet flow path 14 is at least partially disposed at an outer periphery of the first heat exchange region. Therefore, the cooling liquid flows through the outer periphery of the first heat exchange region and enters the second heat exchange region. Moreover, in the first direction, the cooling liquid starts to exchange heat with the second heat exchange region from two sides of the second heat exchange region. It can be understood that the heat loss of the cooling liquid gradually increases as the cooling liquid flows. Therefore, the heat loss of the cooling liquid flowing in the first branch flow path 31 and the second branch flow path 32 of the second heat exchange region is small. At this time, the cooling liquid has a favorable heating effect on the edge portion. Therefore, with the above arrangement, a heating effect on the edge portion of the battery pack 2 corresponding to the second heat exchange region can be improved, improving the cold-start capability of the battery assembly.

The water outlet flow path includes: a first water outlet flow path 51, a second water outlet flow path 52, a third water outlet flow path 53, and a fourth water outlet flow path 54. An end of the first water outlet flow path 51 is in communication with at least one third branch flow path 33 of the second heat exchange region, and the other end of the first water outlet flow path 51 flows sequentially through outer peripheries of the fourth heat exchange region and the third heat exchange region and is in communication with the water outlet 20. Therefore, the cooling liquid enters the first water outlet flow path 51 after flowing through the second heat exchange region, and may exchange heat with edge portions of the fourth heat exchange region and the third heat exchange region when flowing in the first water outlet flow path 51, which improves the utilization rate of the cooling liquid. Meanwhile, it can be understood that the first water outlet flow path 51 collects a cooling liquid from the plurality of branch flow paths in the second heat exchange region. Therefore, a flow rate of the cooling liquid in the first water outlet flow path 51 is greater than a flow rate of the cooling liquid in the branch flow paths of the second heat exchange region. When the cooling liquid flows in the first water outlet flow path 51 and exchanges heat with the edge portions of the fourth heat exchange region and the third heat exchange region, the flow rate of the cooling liquid in the first water outlet flow path 51 can enhance a heating effect on the edge portions of the fourth heat exchange region and the third heat exchange region, make more uniform heating of the plurality of battery packs 2 by the heat exchange plate 1, and improve the cold-start capability of the battery assembly.

According to some embodiments of the present disclosure, a cross-sectional area of a branch flow path of the plurality of branch flow paths in the first heat exchange region is S1, a cross-sectional area of a branch flow path of the plurality of branch flow paths in the second heat exchange region is S2, a cross-sectional area of a branch flow path of the plurality of branch flow paths in the third heat exchange region is S3, and a cross-sectional area of a branch flow path of the plurality of branch flow paths in the fourth heat exchange region is S4, where S4>S2>S3>S1. It can be understood that flow resistance of the cooling liquid in the branch flow paths can be controlled by providing a stop block or the like in the branch flow paths, or by controlling the cross-sectional areas of the branch flow paths, which is not limited herein. Therefore, by setting S4>S2>S3>S1, it can be realized that R4>R2>R3>R1, thus achieving Q4>Q2>Q3>Q1.

The electrical device according to the present disclosure is briefly described below.

The electrical device according to the present disclosure is provided with the battery assembly according to the above embodiments. Since the electrical device according to the present disclosure is provided with the battery assembly according to any one of the above embodiments, the electrical device has high operation stability. The above electrical device may be configured as the vehicle.

In the description of the present disclosure, it should be understood that the orientation or the position indicated by terms such as "center," "longitudinal," "lateral," "length," "width," "thickness," "over," "below," "front," "rear," "left," "right," "vertical," "horizontal," "top," "bottom," "inner," "outer," "clockwise," "anti-clockwise," "axial," "radial," and "circumferential" should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In the description of the present disclosure, "the first feature" and "the second feature" may include one or more of these features.

In the description of the present disclosure, "plurality" means two or more.

In the description of the present disclosure, the first feature "on" or "under" the second feature may mean that the first feature is in direct contact with the second feature, or the first and second features are in indirect contact through another feature between the first and second features.

In the description of the present disclosure, the first feature "above" the second feature means that the first feature is directly above or obliquely above the second feature, or simply means that the level of the first feature is higher than that of the second feature.

Throughout this specification, description with reference to "an embodiment", "some embodiments", "an illustrative embodiment", "an example", "a specific example", "some examples", or the like means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Further, the particular features, structures, materials, or characteristics described here may be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A battery tray, comprising:
a frame arranged in a surrounding manner to define a battery receiving cavity in the frame;
a heat exchange plate disposed on a bottom of the frame and closing the battery receiving cavity; and
an extension plate connected to the heat exchange plate and protruding from an outer periphery of the frame,
wherein a cooling flow channel adapted to exchange heat from the battery receiving cavity is formed in the heat exchange plate, and wherein a water inlet and a water outlet that are in communication with the cooling flow channel are formed on the extension plate.

2. The battery tray according to claim 1, wherein opening directions of the water inlet and the water outlet are the same as an extending direction of the heat exchange plate.

3. The battery tray according to claim 1 or 2, wherein the extension plate comprises:
a body portion connected to the heat exchange plate and having the same extending direction as the heat exchange plate, the body portion protruding from the outer periphery of the frame; and
an adapter box disposed on a side of the body portion in a thickness direction of the body portion, wherein the water inlet and the water outlet are formed on the adapter box, and wherein the adapter box has a first chamber and a second chamber that are formed in the adapter box, the cooling flow channel being in communication with the water inlet and the water outlet respectively via the first chamber and the second chamber.

4. The battery tray according to claim 3, wherein the adapter box comprises:
a housing, wherein the water inlet and the water outlet are formed on a side of the housing facing away from the frame; and
a stop plate disposed in the housing and dividing an interior of the housing into the first chamber and the second chamber, wherein the first chamber is in communication with both the water inlet and the cooling flow channel, and wherein the second chamber is in communication with both the water outlet and the cooling flow channel.

5. The battery tray according to claim 4, wherein a first flow path and a second flow path that extend in a horizontal direction are formed in the body portion, the first chamber being in communication with the cooling flow channel via the first flow path, and the second chamber being in communication with the cooling flow channel via the second flow path, wherein:
the first chamber has a first flow guide wall, wherein the first flow guide wall has a first wall directly facing the first flow path and a second wall directly facing the water inlet, an arc transition being formed between the first wall and the second wall; and
the second chamber has a second flow guide wall, wherein the second flow guide wall has a third wall directly facing the second flow path and a fourth wall directly facing the water outlet, an arc transition being formed between the third wall and the fourth wall.

6. The battery tray according to any one of claims 3 to 5, wherein:
the heat exchange plate comprises:
a first heat exchange plate having a flow channel groove; and
a second heat exchange plate covering the first heat exchange plate and closing the flow channel groove to define the cooling flow channel,
the body portion comprises:
a first adapter plate having an adapter groove in communication with the flow channel groove, the first adapter plate and the first heat exchange plate being constructed as one piece; and
a second adapter plate covering the first adapter plate and closing the adapter groove to define an adapter flow channel in communication with the cooling flow channel, the second adapter plate and the second heat exchange plate being constructed as one piece, wherein:
the adapter box is disposed on a side of the second adapter plate in a thickness direction of the second adapter plate;
the second adapter plate has adapter holes, the adapter flow channel being in communication with the first chamber and the second chamber respectively through the adapter holes.

7. The battery tray according to any one of claims 3 to 6, wherein:
the frame is provided with a first connection member and a second connection member on a side wall of the frame, the body portion being located between the first connection member and the second connection member;
the body portion has a first side edge on a side of the body portion close to the first connection member and a second side edge on a side of the body portion close to the second connection member, the first side edge and the second side edge extending obliquely towards each other in a direction away from the frame.

8. The battery tray according to claim 4 or 5, wherein the housing is provided with a first lug and a second lug on two sides of the housing in a width direction of the housing, respectively, the first lug and the second lug being both fixedly connected to the body portion.

9. The battery tray according to any one of claims 1 to 8, further comprising:
a connection plate disposed on a side of the extension plate in a thickness direction of the extension plate, the extension plate being connected to the frame by the connection plate.

10. The battery tray according to claim 9, wherein the connection plate comprises:
a main portion disposed on a side of the extension plate in the thickness direction of the extension plate and fixed to the extension plate; and
a first side plate and a second side plate that are disposed on two sides of the main portion in a width direction of the main portion and extend to the frame, wherein the first side plate and the second side plate respectively directly face end surfaces of the frame in the thickness direction of the frame and are connected to the end surfaces.

11. A battery assembly, comprising:
a plurality of battery packs arranged sequentially in a first direction, wherein each of the plurality of battery packs is provided with a plurality of battery cells arranged sequentially in a second direction; and
the battery tray according to any one of claims 1 to 10, wherein the plurality of battery packs are received in the battery receiving cavity.

12. The battery assembly according to claim 11, wherein:
the heat exchange plate has a water inlet, a water outlet, a water inlet flow path in communication with the water inlet, and a water outlet flow path in communication with the water outlet;
the heat exchange plate has a plurality of heat exchange regions corresponding to the plurality of battery packs, a plurality of branch flow paths being formed in each of the plurality of heat exchange regions, the plurality of branch flow paths corresponding to each of the plurality of battery packs, an upstream end of each of the plurality of branch flow paths being in communication with the water inlet flow path, and a downstream end of each of the plurality of branch flow paths being in communication with the water outlet flow path.

13. The battery assembly according to claim 12, wherein:
in one of the plurality of heat exchange regions, the plurality of branch flow paths extend in the second direction and are arranged at intervals in the first direction;
a cooling liquid in at least one of the plurality of branch flow paths flows in a first flow direction; and
a cooling liquid in at least one other of the plurality of branch flow paths flows in a second flow direction opposite to the first flow direction.

14. The battery assembly according to claim 12 or 13, wherein the number of branch flow paths in the first flow direction is i1, and the number of branch flow paths in the second flow direction is i2, where 0.3≤i1/i2≤1.

15. The battery assembly according to any one of claims 12 to 14, wherein the plurality of branch flow paths comprises:
a first branch flow path and a second branch flow path that are formed on two sides of the heat exchange region in the first direction, respectively; and
a plurality of third branch flow paths that are in communication with each other, the plurality of third branch flow paths being formed between the first branch flow path and the second branch flow path,
wherein the first branch flow path is in communication with the second branch flow path via the plurality of third branch flow paths, wherein:
in at least one of the plurality of heat exchange regions, the first branch flow path is in communication with the water inlet flow path, and the second branch flow path is in communication with the water outlet flow path; and/or
in at least one of the plurality of heat exchange regions, each of the first branch flow path and the second branch flow path is in communication with the water inlet flow path, and at least one of the plurality of third branch flow paths is in communication with the water outlet flow path.

16. The battery assembly according to claim 15, wherein the plurality of heat exchange regions comprises a first heat exchange region, a second heat exchange region, a third heat exchange region, and a fourth heat exchange region, wherein:
the first heat exchange region and the second heat exchange region are spaced apart from each other in the second direction;
the first heat exchange region and the third heat exchange region are spaced apart from each other in the first direction;
the fourth heat exchange region and the third heat exchange region are spaced apart from each other in the second direction; and
the fourth heat exchange region and the second heat exchange region are spaced apart from each other in the first direction;
the water inlet is formed in the first heat exchange region; and
the water outlet is formed in the third heat exchange region.

17. The battery assembly according to claim 16, wherein:
a cross-sectional area of a branch flow path of the plurality of branch flow paths in the first heat exchange region is S1;
a cross-sectional area of a branch flow path of the plurality of branch flow paths in the second heat exchange region is S2;
a cross-sectional area of a branch flow path of the plurality of branch flow paths in the third heat exchange region is S3; and
a cross-sectional area of a branch flow path of the plurality of branch flow paths in the fourth heat exchange region is S4, where S4>S2>S3>S1.
